# FASCICULE DE BREVET EUROPEEN

(11) **EP 2 160 737 B1**
(45) Date de publication et mention de la délivrance du brevet: **27.03.2013**
(21) Numéro de dépôt: 08806018.1
(22) Date de dépôt: 18.06.2008
(51) Int. Cl.: H01B 3/44

(54) **CONDUCTEUR ELECTRIQUE ISOLE**
ISOLIERTER ELEKTRISCHER LEITER
INSULATED ELECTRICAL CONDUCTOR

(30) Priorité: 20.06.2007 FR 0755884
(43) Date de publication de la demande: 10.03.2010
(73) Titulaire: Nexans, 75008 Paris (FR)
(72) Inventeur: KENSICHER, Christèle, F-69007 Lyon (FR); PETITET, Laurent, F-42330 Saint Galmier (FR)
(74) Mandataire: Peguet, Wilfried
(86) Numéro de dépôt international: PCT/FR2008/051083
(87) Numéro de publication internationale: WO 2009/004245

(56) Documents cités:
- EP-A- 1 295 910
- US-B1- 6 395 791

## Description

La présente invention se rapporte à un conducteur électrique isolé (ou câble électrique), et s'applique typiquement, mais non exclusivement, aux conducteurs électriques isolés pour batteries dans le domaine de l'automobile.

De nombreux isolants pour conducteurs électriques à base de polymère d'éthylène et de polymère de propylène, lorsqu'ils subissent une contrainte de pliage ou de compression, présentent au niveau de la zone de pliure ou de compression un blanchiment de leur surface.

A titre d'exemple de composition à base de polymère d'éthylène et de polymère de propylène, on peut citer le document US6395791 qui décrit une mousse polymérique préparée à partir d'un mélange de 80% en poids de polyéthylène linéaire basse densité (LLDPE), de 20% en poids de polypropylène, et d'un agent de couplage.

Ce blanchiment, dû à la déformation mécanique de l'isolant, induit ainsi une fragilité mécanique et électrique dudit isolant, cette fragilité pouvant aller jusqu'à son craquement.

De ce fait, l'isolant ne protège plus mécaniquement, électriquement et chimiquement le conducteur électrique de façon optimale.

Le problème technique à résoudre, par l'objet de la présente invention, est de proposer un conducteur électrique isolé comprenant un conducteur électrique entouré par une couche isolante extrudée, ladite couche isolante extrudée permettant d'éviter les problèmes de l'état de la technique en offrant notamment des propriétés de résistances mécaniques améliorées permettant d'éviter le blanchiment de ladite couche sous l'action de déformations mécaniques de type pliure ou compression.

La solution du problème technique posé réside, selon la présente invention, par le fait que ladite couche est une couche réticulée obtenue à partir d'une composition comprenant un polymère constitué de 80 % en poids d'un copolymère d'éthylène et de 20 % en poids d'un homopolymère ou copolymère de propylène, le copolymère d'éthylène étant un copolymère d'éthylène-octène.

La Demanderesse a découvert de façon surprenante qu'en choisissant spécifiquement ledit polymère, le blanchiment des zones de pliure ou de compression de la couche isolante extrudée conforme à la présente invention est limité de façon significative, voire évité.

Ladite couche garde ainsi ses propriétés mécaniques, électriques et de résistances chimiques quelque soit la configuration du conducteur électrique isolé, c'est-à-dire même lorsque ce dernier subit une déformation mécanique du type pliure ou compression.

Avantageusement, le copolymère d'éthylène-octène a une faible densité, ce qui lui permet d'absorber une grande quantité de charges lors de sa mise en oeuvre, et une faible cristallinité, ce qui lui permet d'avoir une bonne tenue au froid, notamment à des températures pouvant aller jusqu'à - 40°C.

Dans un exemple particulier, le copolymère de propylène est un copolymère de propylène-éthylène.

Dans un mode de réalisation préféré, le polymère est greffé silane afin d'être réticulé par un procédé bien connu de l'homme du métier dit « réticulation silane ».

Dans un mode de réalisation particulier, la composition comprend en outre une charge ignifugeante.

La charge ignifugeante peut être un hydroxyde métallique, de préférence le dihydroxyde de magnésium (MDH) ou le trihydroxyde d'aluminium (ATH).

Dans un autre mode de réalisation particulier, la composition comprend en outre un agent protecteur choisi parmi les antioxydants et les désactivateurs de métal, ou leur mélange.

Les antioxydants peuvent être typiquement des thioesters et/ou des phénols encombrés, tandis que les désactivateurs de métal, utilisés pour limiter la dégradation catalytique de la couche isolante par le métal du conducteur électrique, sont par exemple des composés phénoliques bien connus de l'homme du métier.

Dans un autre mode de réalisation particulier, la composition comprend en outre une cire du type amide d'acide gras.

L'amide d'acide gras permet de faciliter l'extrusion de la composition et peut être par exemple choisi parmi les familles suivantes : acétamide, propionamide, n-butyramide, n-valeramide, n-caproamide, stearamide, erucamide, lauroylamide, miristique amide, arachidamide, behenamide, oleamide, ethylene-bis-stearamide, ethylene-bis-oleamide, et oleyl palmitamide, ou leur mélange.

Dans un autre mode de réalisation particulier, la composition comprend en outre un agent colorant.

L'agent colorant est typiquement un colorant minéral ou organique bien connu de l'homme du métier, de préférence possédant une tenue à des températures élevées, notamment de l'ordre de 150 et 200°C.

A titre d'exemple, l'agent colorant peut être du noir de carbone (pigments).

Dans un mode de réalisation préféré, le conducteur électrique a une section transversale supérieure à 6 mm², pouvant atteindre 90 mm², voire 150 mm².

Cette section est typique des conducteurs électriques pour batteries dans le domaine de l'automobile.

La composition selon la présente invention permet ainsi d'obtenir une couche isolante dite « super souple », utilisée pour ce type de conducteurs.

D'autres caractéristiques et avantages de la présente invention apparaîtront à la lumière des exemples qui vont suivre, lesdits exemples étant donnés à titre illustratif et nullement limitatif.

Afin de montrer les avantages des compositions selon la présente invention, des couches isolantes extrudées ont été préparées à partir de compositions selon l'invention et selon l'art antérieur afin d'étudier leur blanchiment et leur « résistance au choc » selon la norme ISO-6722 Partie 1 § 8.2.

La préparation des couches isolantes, et notamment leur mode de réticulation, sont donnés à titre d'exemple et ne sont nullement limitatif.

Dans une première étape, on mélange en continue et en chauffant les différents constituant du Tableau 1 (compositions A à C), à l'aide d'un mélangeur monovis Buss ou d'une extrudeuse bivis.

Il est à noter que les quantités mentionnées dans le Tableau 1 sont classiquement exprimées en parties en poids pour 100 parties en poids de polymère dans la composition.

**Tableau 1**

| | A | B | C |
|---|---|---|---|
| PEO | 60 | 70 | 80 |
| PP | 40 | 30 | 20 |
| Agent de réticulation silane (alkoxysilane ou carboxysilane) et peroxyde organique | 2,5 | 2,5 | 2,5 |

La température du mélange de cette première étape est telle qu'elle permet typiquement de mettre en oeuvre le polymère tout en décomposant le peroxyde organique.

Le PEO un copolymère d'éthylène-octène, référencé Engage 8450 et commercialisé par la société Dow Elastomers

Le PP est un copolymère de propylène-éthylène, référencé Moplen RP315M et commercialisé par la société Basell.

Cette première étape permet d'obtenir un polymère greffé silane, le polymère greffé silane étant typiquement obtenu sous forme de granulés (respectivement granulés A à C).

Dans une deuxième étape, on mélange en continue et en chauffant 100 parties en poids de polymère greffé silane (granulés A à C) aux différentes quantités de cire, d'agents protecteurs et de charges ignifugeantes détaillés dans le Tableau 2 (compositions A' à C').

L'homme du métier comprend aisément que les quantités mentionnées dans le Tableau 2 sont exprimées en parties en poids pour 100 parties en poids de polymère greffé silane dans la composition.

**Tableau 2**

| | A' | B' | C' |
|---|---|---|---|
| Polymère greffé silane | 100 | | |
| Cire | 1 | | |
| Agents protecteurs | 4 | | |
| Charge ignifugeante | 150 | 156 | 150 |

Le mélange est effectué à l'aide d'un autre mélangeur monovis Buss ou d'une autre extrudeuse bivis.

La cire, les agents protecteurs et les charges ignifugeantes sont ajoutés au polymère greffé silane à l'aide d'une trémie doseuse classique.

La température du mélange de cette deuxième étape est telle qu'elle permet typiquement de mettre en oeuvre les granulés de polymère greffé silane tout en évitant la décomposition des charges ignifugeantes.

La cire est un amide d'acide gras référencé Crodamide 203, commercialisé par la société Croda France.

L'agent protecteur est la combinaison d'antioxydants (Irganox 1010 et/ou Irganox PS 802) et de désactivateurs de métal (Irganox 1024 et/ou Naugard XL1), le choix des antioxydants et des désactivateurs de métal étant uniquement donnés à titre d'exemple.

La charge ignifugeante est de l'ATH commercialisé par la société Albermarle.

Cette deuxième étape permet d'obtenir un polymère greffé silane chargé, le polymère greffé silane chargé étant typiquement obtenu sous forme de granulés (respectivement granulés A' à C').

Dans une troisième étape, les granulés de polymère greffé silane chargé (granulés A' à C') sont mis en oeuvre dans une extrudeuse monovis en présence d'un catalyseur de la réaction de condensation de groupements silanols et d'un agent colorant, par exemple du noir de carbone.

Le catalyseur ainsi que l'agent colorant sont typiquement ajouté au polymère greffé silane chargé sous forme d'un mélange maître respectif à base d'une polyoléfine compatible avec ledit polymère greffé.

A titre d'exemple, le mélange maître contenant ledit catalyseur est ajouté en une quantité d'environ 2 % en poids au polymère greffé silane chargé, et le mélange maître contenant ledit agent colorant est ajouté en une quantité d'environ 1,5 % en poids au polymère greffé silane chargé.

L'agent colorant permet de visualiser plus facilement les zones de blanchiment, notamment lorsque l'agent colorant est d'une couleur différente de la couleur blanche.

Le mélange du polymère greffe silane chargé, du catalyseur de condensation des silanols, et du noir de carbone est extrudé, par exemple sur un barreau d'aluminium (monobrin) d'une section de 150 mm², en une épaisseur de 0,9 mm, pour obtenir une couche isolante de couleur noire.

Dans une quatrième étape, la couche isolante est réticulée en présence d'eau pour obtenir un conducteur électrique isolé (conducteurs électriques isolés A à C obtenus respectivement à partir des compositions A' à C').

Le procédé décrit ci-avant est la réticulation silane connue de l'homme du métier, en particulier sous l'appellation réticulation « dans la piscine » ou réticulation « dans le sauna ».

Bien entendu, tout autre procédé bien connu de l'homme du métier peut être utilisé pour la réticulation du polymère de la composition selon la présente invention.

Notamment, la réticulation de la composition peut s'effectuer par voie photochimique telle que irradiation sous rayonnement béta, ou irradiation sous rayonnement ultraviolet en présence d'un photoamorceur.

La réticulation en bain de sel ou en tube vapeur en présence d'un peroxyde organique sont deux autres procédés pouvant être également envisagés.

Pour évaluer le blanchiment de la couche isolante des conducteurs électriques isolés A à C, une longueur de 250 mm de chacun desdits conducteurs est pliée à température ambiante avec un outil de pliage adapté pour barreau de 7,1 mm et forme ainsi une zone de pliure.

A ladite zone de pliure apparaît clairement un blanchiment de la couche isolante noire pour les conducteurs électriques isolés A et B.

Au contraire, la couleur noire de la couche isolante du conducteur électrique isolé C reste quant à elle totalement homogène sans zone de blanchiment apparente.

Ensuite, afin d'évaluer la résistance au choc de la zone de pliure, lesdits conducteurs électriques isolés A à C pliés de 250 mm de longueur sont soumis au test selon la norme ISO 6722 Partie 1 § 8.2.

Lesdits conducteurs A à C subissent un choc sur leur zone de pliure à l'aide d'une masse de 300 g, après avoir été confinés pendant 6h00 à une température de -30°C.

Après le choc, les conducteurs A à C sont placés à température ambiante et aucune zone de blanchiment sur la couche isolante du conducteur électrique isolé C n'est observée, contrairement à celle des conducteurs électriques isolés A et B.

Puis, le test de résistance au choc est poursuivi avec l'étude de la rigidité électrique / tension de maintien selon la norme ISO-6722 Partie 1 § 6.2 pour chaque conducteur électrique isolé A à C.

Le protocole ci-après est appliqué pour chaque conducteur électrique isolé A à C.

Le conducteur électrique isolé est immergé dans une solution saline (3% en masse de NaCl dans l'eau) pendant 10 minutes.

Puis, une tension de 1 kV AC (fréquence = 50 Hz) est appliquée 1 min entre le conducteur électrique et la solution

Ainsi, durant ce test, aucun claquage ne se produit sur le conducteur électrique isolé C, contrairement aux conducteurs électriques isolés A et B.

Par conséquent, seul le conducteur électrique isolé C présente des propriétés mécaniques et électriques homogènes quelque soit la configuration dudit conducteur.

La présente invention n'est pas limitée à l'exemple qui vient d'être décrit et porte dans sa généralité sur toutes les compositions envisageables à partir des indications générales fournies dans l'exposé de l'invention.

## Revendications

1. Conducteur électrique isolé comprenant un conducteur électrique entouré par une couche isolante extrudée, **caractérisé en ce que** ladite couche est une couche réticulée obtenue à partir d'une composition comprenant un polymère constitué de 80 % en poids d'un copolymère d'éthylène-octène et de 20 % en poids d'un homopolymère ou copolymère de propylène.

2. Conducteur électrique isolé selon la revendication 1, **caractérisé en ce que** le copolymère de propylène est un copolymère de propylène-éthylène.

3. Conducteur électrique isolé selon l'une quelconque des revendications précédentes, **caractérisé en ce que** le polymère est greffé silane.

4. Conducteur électrique isolé selon l'une quelconque des revendications précédentes, **caractérisé en ce que** la composition comprend en outre une charge ignifugeante.

5. Conducteur électrique isolé selon l'une quelconque des revendications précédentes, **caractérisé en ce que** la composition comprend en outre un agent protecteur choisi parmi les antioxydants et les désactivateurs de métal, ou leur mélange.

6. Conducteur électrique isolé selon l'une quelconque des revendications précédentes, **caractérisé en ce que** la composition comprend en outre une cire du type amide d'acide gras.

7. Conducteur électrique isolé selon l'une quelconque des revendications précédentes, **caractérisé en ce que** la composition comprend en outre un agent colorant.

8. Conducteur électrique isolé selon l'une quelconque des revendications précédentes, **caractérisé en ce que** le conducteur électrique a une section transversale supérieure à 6 mm².

## Claims

1. An insulated electrical conductor comprising an electrical conductor surrounded by an extruded insulating layer, **characterized in that** said layer is a crosslinked layer obtained from a composition comprising a polymer consisting of 80% by weight of an ethylene-octene copolymer and of 20% by weight of a propylene homopolymer or copolymer.

2. The insulated electrical conductor according to claim 1, **characterized in that** the propylene copolymer is a propylene-ethylene copolymer.

3. The insulated electrical conductor according to any of the preceding claims, **characterized in that** the polymer is silane-grafted.

4. The insulated electrical conductor according to any of the preceding claims, **characterized in that** the composition further comprises a flame-retardant filler.

5. The insulated electrical conductor according to any of the preceding claims, **characterized in that** the composition further comprises a protective agent selected from antioxidants and metal deactivators, or a mixture thereof.

6. The insulated electrical conductor according to any of the preceding claims, **characterized in that** the composition further comprises a wax of the fatty acid amide type.

7. The insulated electrical conductor according to any of the preceding claims, **characterized in that** the composition further comprises a coloring agent.

8. The insulated electrical conductor according to any of the preceding claims, **characterized in that** the electrical conductor has a cross section of more than 6 mm².

## Patentansprüche

1. Isolierter elektrischer Leiter, der einen von einer extrudierten Isolationsschicht umgebenen elektrischen Leiter umfasst, **dadurch gekennzeichnet, dass** die Schicht eine vernetzte Schicht ist, die aus einer Zusammensetzung gewonnen wurde, die ein Polymer enthält, das zu 80 Ges.-% aus einem Ethylen-Octen-Copolymer und zu 20 % Ges.-% aus einem Homopolymer oder Propylen-Copolymer besteht.

2. Isolierter elektrischer Leiter nach Anspruch 1, **dadurch gekennzeichnet, dass** das Propylen-Copolymer ein Propylen-Ethylen-Copolymer ist.

3. Isolierter elektrischer Leiter nach einem der vorangehenden Ansprüche, **dadurch gekennzeichnet, dass** das Polymer mit Silan gepfropft ist.

4. Isolierter elektrischer Leiter nach einem der vorangehenden Ansprüche, **dadurch gekennzeichnet, dass** die Zusammensetzung ferner eine flammwidrige Charge umfasst.

5. Isolierter elektrischer Leiter nach einem der vorangehenden Ansprüche, **dadurch gekennzeichnet, dass** die Zusammensetzung ferner ein Schutzmittel umfasst, das aus den Antioxidantien und den Metalldeaktivatoren oder ihrem Gemisch ausgewählt ist.

6. Isolierter elektrischer Leiter nach einem der vorangehenden Ansprüche, **dadurch gekennzeichnet, dass** die Zusammensetzung ferner ein Wachs vom Typ Fettsäureamid umfasst.

7. Isolierter elektrischer Leiter nach einem der vorangehenden Ansprüche, **dadurch gekennzeichnet, dass** die Zusammensetzung ferner einen Farbstoff umfasst.

8. Isolierter elektrischer Leiter nach einem der vorangehenden Ansprüche, **dadurch gekennzeichnet, dass** der elektrische Leiter einen Querschnitt von über 6 mm² hat.
